# EUROPÄISCHE PATENTSCHRIFT

(11) **EP 2 422 738 B1**
(45) Veröffentlichungstag und Bekanntmachung des Hinweises auf die Patenterteilung: **10.04.2019**
(21) Anmeldenummer: 11004040.9
(22) Anmeldetag: 16.05.2011
(51) Int. Cl.: A61C 1/14, A61C 3/03, A61C 1/07, A61C 5/00, A61C 17/20

(54) **Schall- und Ultraschalldentalinstrument, Schallspitzenkupplungsvorrichtung und Schallspitzenwerkzeug**
Sonic and ultrasonic dental instrument, sonic head coupling device and sonic tool
Instrument dentaire sonique et ultrasonique, dispositif de couplage de pointes soniques et outil à pointes soniques

(30) Priorität: 10.08.2010 DE 102010033866
(43) Veröffentlichungstag der Anmeldung: 29.02.2012
(73) Patentinhaber: Gebr. Brasseler GmbH & Co. KG, D-32657 Lemgo (DE)
(72) Erfinder: Ranis, Lutz, 32429 Minden (DE); Otto, Bernd, 32689 Kalletal (DE)
(74) Vertreter: Hoefer & Partner Patentanwälte mbB

(56) Entgegenhaltungen:
- EP-A1- 2 022 437
- EP-A1- 2 050 413
- EP-A1- 2 145 598
- DE-A1-102005 058 879
- DE-U1- 29 810 915
- JP-A- 2007 167 282
- JP-U- S60 160 813

## Beschreibung

Die Erfindung bezieht sich auf ein oszillierend angetriebenes Dentalinstrument, das durch Schall- oder Ultraschallschwingungen in Betrieb gesetzt wird, mit einer Schallspitzenkupplungsvorrichtung. Weiterhin bezieht sich die Erfindung auf ein Schallspitzenwerkzeug sowie ein Dentalschallspitzenset.

Schall und ultraschallaktivierbare Dentalinstrumente sind aus dem Stand der Technik bekannt. Hierzu wird beispielsweise auf die DE 31 05 424 C2, die WO 86/05967 und die DE 297 19 474 U1 verwiesen.

Der Stand der Technik zeigt somit Schallübertrager, welche vielfach in Form eines Handstückes ausgebildet sind. An diesen ist ein Werkzeughalter befestigt, an welchem wiederum ein Werkzeug lösbar befestigt werden kann. Hierbei zeigt der Stand der Technik unterschiedliche Klemmfunktionen, die hinsichtlich ihrer Bedienung unterschiedlich kompliziert sind und jeweils einen nicht unerheblichen manuellen Aufwand erfordern, um die einzelnen Werkzeuge einzubauen bzw. auszutauschen. Dies ist insbesondere während eines Behandlungs- oder Operationsvorgangs sehr nachteilig.

Ein weiterer Nachteil der vorbekannten Konstruktionen liegt darin, dass vielfach eine Schallankopplung zur Übertragung der Schallenergie nicht vollständig gewährleistet werden kann, so dass sich bei der Bedienung und beim Einsatz Fehler oder Fehlfunktionen ergeben können.

Die JP 2007-167282 A zeigt ein schall- und ultraschallaktivierbares Dentalinstrument, welches an seinem freien Ende mit einem Schlitz versehen ist, in welchen ein Schallspitzenwerkzeug einlegbar ist. Durch Verdrehen einer Kappe des Dentalinstruments wird das Werkzeug, welches einen verdickten hinteren Bereich aufweist, geklemmt.

Ein Ultraschall-Handstück sowie ein Werkzeug für dieses zeigt die EP 2 050 413 A1. Dabei ist an der Antriebseinheit ein Umlenkkopf befestigt, der mit einer Bohrung quer zur Längsachse versehen ist, in welche ein Kopf eines Werkzeugs einlegbar und mittels einer Schraube sicherbar ist.

Die EP 2 022 437 A1 zeigt ein zahnärztliches Handstück mit einer über ein Kupplungsstück mechanisch verbindbaren Werkzeugspitze, wobei die Werkzeugspitze mittels einer Feder gesichert ist.

Der Erfindung liegt die Aufgabe zugrunde, ein oszillierend angetriebenes Dentalinstrument mit einer Schallspitzenkupplungsvorrichtung, ein Schallspitzenwerkzeug hierzu sowie ein Dentalschallspitzenset zu schaffen, welche bei einfachem Aufbau und einfacher, kostengünstiger Herstellbarkeit leicht bedienbar sind und ein hohes Maß an Funktionsfähigkeit aufweisen.

Erfindungsgemäß wird die Aufgabe durch die Merkmalskombinationen der unabhängigen Ansprüche 1 und 3 gelöst, die jeweiligen Unteransprüche zeigen weitere vorteilhafte Ausgestaltungen der Erfindung.

Erfindungsgemäß ist hinsichtlich des schallaktivierbaren Dentalinstruments somit vorgesehen, dass dieses eine Schallspitzenkupplungsvorrichtung aufweist, welche zur lösbaren Befestigung eines Werkzeugs an einem Werkzeughalter dient. Hierzu ist die Kupplungsvorrichtung an einem distalen Endbereich des Werkzeughalters ausgebildet und weist ein am distalen Endbereich vorgesehenes Gewinde auf. Weiterhin sieht die Erfindung eine auf das Gewinde aufschraubbare hülsenartige, mit einer Durchgangsausnehmung versehene Klemmmutter auf. Die Klemmmutter kann somit manuell oder unter Zuhilfenahme eines Werkzeugs auf den Werkzeughalter aufgeschraubt werden, um auf diese Weise das Werkzeug selbst zu klemmen.

Im Rahmen der Erfindung ist vorgesehen, dass die Klemmmutter mit einer schlitzartigen Ausnehmung versehen ist, welche sich vom distalen freien Ende der Klemmmutter bis in einen mittigen Bereich der Klemmmutter erstreckt und an ihrem proximalen, dem Werkzeughalter zugewandten Ende vergrößert ausgebildet ist. Die schlitzartige Ausnehmung weist somit im Wesentlichen eine gleichbleibende Breite auf, lediglich der Endbereich der schlitzartigen Ausnehmung ist deutlich vergrößert. Weiterhin ist der Durchmesser der Durchgangsausnehmung am distalen Ende kleiner als am proximalen Ende bzw. am mittigen Bereich.

Somit ist es erfindungsgemäß möglich, mittels der Klemmmutter ein Schallspitzenwerkzeug am Werkzeughalter zu befestigen und zu spannen. Dabei dient der vergrößerte mittige Bereich der schlitzartigen Ausnehmung dazu, einen verdickten Endbereich des Schallspitzenwerkzeugs einzuschieben. Dies kann in einer Richtung senkrecht zur Längsachse des Werkzeughalters erfolgen. Das Werkzeug ist dann in einfacher Weise um 90° schwenkbar, wobei es bei diesem Schwenkvorgang in die schlitzartige Ausnehmung eingelegt wird. Durch nachfolgendes Aufschrauben und Festziehen der Klemmmutter wird dann das Schallspitzenwerkzeug fest mit dem Werkzeughalter verschraubt und verklemmt.

Erfindungsgemäß ergibt sich somit eine sehr einfache Montage, welche auch unter Operations- oder Präparationsbedingungen durch den Zahnarzt einfach und sicher durchgeführt werden kann. Dabei ist es insbesondere vorteilhaft, dass das Schallspitzenwerkzeug ungehindert gegriffen und eingeführt werden kann, ohne dass es erforderlich ist, die Klemmmutter abzuschrauben. Eine Fehlfunktion durch falsches Aufschrauben der Klemmmutter auf das Gewinde des Werkzeughalters ist somit gänzlich ausgeschlossen.

Weiterhin ergibt sich der erfindungsgemäße Vorteil, dass nur eine Kupplungsvorrichtung erforderlich ist, um unterschiedlichste Werkzeuge einzuspannen, da diese lediglich an ihrem Einspannende, wie nachfolgend noch beschrieben werden wird, passend zur Kupplungsvorrichtung ausgebildet sein müssen. Hierdurch ergibt sich eine erhebliche Kosteneinsparung, da der Zahnarzt lediglich die einzelnen Schallspitzenwerkzeuge bevorraten muss, während der Werkzeughalter selbst unbeschränkt verwendet werden kann.

Durch die erfindungsgemäße Lösung ist es möglich, unterschiedlichste Präparationsinstrumente zu verwenden, beispielsweise für die Prophylaxe, für die Wurzelkanalpräparation, für die Kronenpräparation, für die Kavitätenpräparation, für die Implantologie und für die zahnärztliche Chirurgie.

Auch bei einer Fraktur oder einem Verschleiß des Schallspitzenwerkzeuges ist eine einfache Auswechselbarkeit gegeben, ohne dass hierfür ein kompletter Werkzeughalter ausgetauscht werden muss.

Ein weiterer, wesentlicher Vorteil der Erfindung besteht darin, dass die Reinigung einfach möglich ist, da die Kupplungsvorrichtung nur aus zwei Bauteilen besteht, nämlich dem Werkzeughalter und der Klemmmutter. Die Klemmmutter kann in einfacher Weise vom Werkzeughalter demontiert werden, so dass beide Bauelemente gereinigt werden können. Die erfindungsgemäße Konstruktion sichert weiterhin eine in hohem Maße funktionsgerechte Klemmverbindung, bei welcher sich nicht die Gefahr eines Lösens oder einer hieraus bedingten Fehlfunktion ergeben kann.

Gemäß der Erfindung ist vorgesehen, dass am Übergang des größeren Durchmessers der Durchgangsausnehmung der Klemmmutter zum distal angeordneten kleineren Durchmesser in der Durchgangsausnehmung eine erste Konusfläche ausgebildet ist. Diese kann zur Anlage und zum Anpressen des verdickt ausgebildeten Endbereichs des Schallspitzenwerkzeuges dienen. Hierdurch ist eine hervorragende Schallübertragung gewährleistet. Bei Ausgestaltungen, bei welchen der Werkzeughalter mit einer Durchgangsausnehmung zur Durchleitung von beispielsweise Kühlflüssigkeit ausgebildet ist, ist diese Ausgestaltung ebenfalls besonders vorteilhaft, da sie eine selbstdichtende Funktion hat.

Weiterhin ist es erfindungsgemäß, wenn am distalen Endbereich des Werkzeughalters eine zweite innenliegende Konusfläche ausgebildet ist. Somit wird der verdickte Endbereich des Schallspitzenwerkzeugs zwischen den beiden Konusflächen sicher gehalten, zentriert und geklemmt.

Erfindungsgemäß kann es günstig sein, den Werkzeughalter mit einer sich axial erstreckenden Durchgangsausnehmung zu versehen, um Kühlfluid zuzuleiten. Weiterhin kann der Werkzeughalter gerade oder gebogen ausgebildet werden, um an unterschiedlichste Anwendungsbedingungen angepasst zu werden.

Hinsichtlich des erfindungsgemäßen Schallspitzenwerkzeugs ist vorgesehen, dass dieses einen distalen Arbeitsbereich aufweist, welcher beispielsweise nadelartig als Spitze für die Endodontie, speziell für die Aktivierung von Spülflüssigkeiten, ausgebildet sein kann oder als Wechselspitze für die Implantatreinigung mit einer Rille zur Beförderung der Kühlflüssigkeit zur Instrumentenspitze. Der Arbeitsbereich kann dabei beispielsweise aus einem Kunststoff, wie beispielsweise PEEK ausgebildet sein. Weiterhin ist es möglich, den Arbeitsbereich als Wechselspitze für die Politur von Kunststoff und Keramik in Form eines Polierers oder einer Bürste, gegebenenfalls mit Zuführung von Kühlflüssigkeit ausgestaltet sein. Erfindungsgemäß ist es weiterhin möglich, den Arbeitsbereich für die Kronenstumpfpräparation und zum Exkavieren auszubilden und beispielsweise mit einer Verzahnung zu versehen. Zusätzlich kann eine seitliche Schlitzung und/oder eine zentrische Bohrung vorgesehen sein, um das Kühlmedium nach vorn zu transportieren. Ein derartiger Arbeitsbereich ist beispielsweise aus Hartmetall gefertigt. Weiterhin ist es erfindungsgemäß möglich, den

Arbeitsbereich mit abrasiven Partikeln, wie Diamantkörpern, zu belegen, um das Schallspitzenwerkzeug für die Kronenpräparation und/oder für das Exkavieren zu verwenden.

Das erfindungsgemäße Schallspitzenwerkzeug weist einen proximalen Schaft auf, an dessen freiem Ende ein verdickter Bereich ausgebildet ist, welcher in Form eines Doppelkonusbereichs ausgebildet ist. Nicht erfindungsgemäß kann der verdickte Bereich jedoch auch Kugelbereiche umfassen, die mit der ersten Konusfläche und/oder der zweiten Konusfläche der Klemmmutter bzw. des Werkzeughalters zusammenwirken.

Das Schallspitzenwerkzeug kann mit einer zentrischen und/oder außenliegenden axialen Ausnehmung durch den Schaft und/oder den Arbeitsbereich versehen sein, um Spülflüssigkeit oder Ähnliches zuzuführen.

Weiterhin kann es erfindungsgemäß günstig sein, wenn der Schaft zumindest angrenzend an den verdickten Bereich oder Konusbereich mit einem in Axialrichtung gleichbleibenden Durchmesser versehen ist. Hierdurch ist ein Einschwenken und Einlegen in die schlitzartige Ausnehmung der Kupplungsvorrichtung sichergestellt.

Das Schallspitzenwerkzeug zur Aktivierung von Spülflüssigkeiten kann erfindungsgemäß bevorzugt aus einem Nickel-Titan-Werkstoff gefertigt sein und/oder mit einer Titan-Nitrid-Beschichtung versehen sein und/oder mit einer Laser- oder Farbmarkierung versehen sein.

Erfindungsgemäß ist weiterhin ein Dentalschallspitzenset vorgesehen, welches einen Schallübertrager, einen an diesem lösbar gelagerten Werkzeughalter sowie eine Schallspitzenkupplungsvorrichtung der oben beschriebenen Art umfasst und lösbar an dem Werkzeughalter gelagerte Werkzeuge der oben beschriebenen Art umfasst.

Mittels der Erfindung ist es möglich, medizinisch geeignete Kühlflüssigkeiten zuzuführen, die entweder durch den Werkzeughalter durchgeleitet werden und im Bereich des Werkzeugs an dessen Spitze austreten oder durch den Werkzeughalter geleitet und dann seitlich durch einen Schlitz des Werkzeugs geleitet werden.

Im Folgenden wird die Erfindung anhand eines Ausführungsbeispiels in Verbindung mit der Zeichnung beschrieben. Dabei zeigt:
- Fig. 1: eine Seitenansicht eines Ausführungsbeispiels eines erfindungsgemäßen Werkzeughalters,
- Fig. 2: eine axiale Schnittansicht eines Ausführungsbeispiels einer erfindungsgemäßen Klemmmutter,
- Fig. 3: eine stirnseitige Ansicht der in Fig. 2 gezeigten Klemmmutter,
- Fig. 4: eine Seitenansicht der in den Fig. 2 und 3 gezeigten Klemmmutter,
- Fig. 5: eine Seitenansicht eines Ausführungsbeispiels eines erfindungsgemäßen Schallspitzenwerkzeugs,
- Fig. 6: eine perspektivische Ansicht der in den Fig. 2 bis 4 gezeigten Klemmmutter,
- Fig. 7, 8: perspektivische Ansichten zum Einsetzen eines Werkzeugs in die erfindungsgemäße Kupplungsvorrichtung.

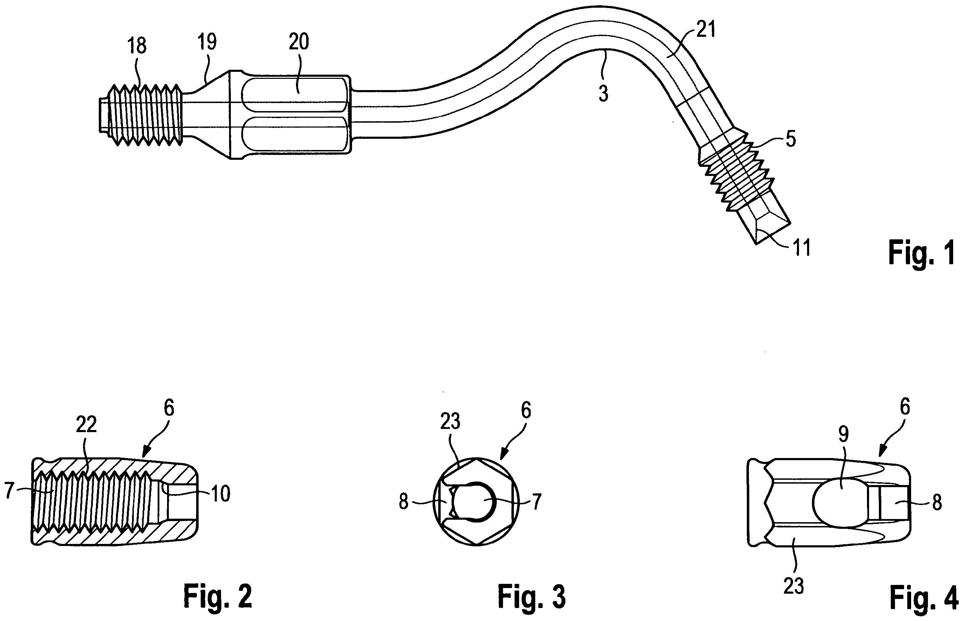

Die Fig. 1 zeigt ein Ausführungsbeispiel eines erfindungsgemäßen Werkzeughalters 3 in der Seitenansicht. Der Werkzeughalter weist an seinem proximalen Ende ein Einspanngewinde 18 auf, mit welchem er in üblicher Weise lösbar mit einem Schallübertrager 4 verschraubbar ist. Zur Schallübertragung dient insbesondere ein Konus 19, der an einem entsprechenden Gegenkonus des Schallübertragers 4 anlegbar und verspannbar ist. Die Montage erfolgt mittels eines Werkzeugseingriffbereichs 20, der beispielsweise als Sechskant ausgebildet sein kann.

Am distalen Ende ist der Werkzeughalter 3 mit einem Gewinde 5 versehen. Das distale Ende weist weiterhin eine zweite Konusfläche 11 auf, gegen welche, wie nachfolgend beschrieben werden wird, ein Werkzeug 2 klemmbar ist. Weiterhin ist der Werkzeughalter 3 mit einem Durchgangskanal 21 versehen, durch welchen Spülfluid oder Kühlfluid durchführbar ist.

Die Fig. 2 bis 4 zeigen eine erfindungsgemäße Klemmmutter, welcher hülsenartig ausgebildet ist und eine Durchgangsausnehmung 7 aufweist. Wie die Fig. 2 zeigt, ist ein Innengewinde 22 vorgesehen, welches mit dem Gewinde 5 des Werkzeughalters 3 verschraubbar ist. Am Ende des Gewindes ist eine erste Konusfläche 10 ausgebildet, welche zur Anlage an einen verdickten Bereich 15 bzw. einen Doppelkonusbereich des Werkzeugs 2 dient, so wie dies nachfolgend noch beschrieben werden wird.

Die Klemmmutter 6 ist mit einem Werkzeugeingriffsbereich 23 versehen, der ebenfalls in Form eines Sechskants ausgebildet sein kann und bevorzugterweise die gleichen Abmessungen aufweist, wie der Werkzeugeingriffsbereich 20, so dass dasselbe Werkzeug verwendet werden kann.

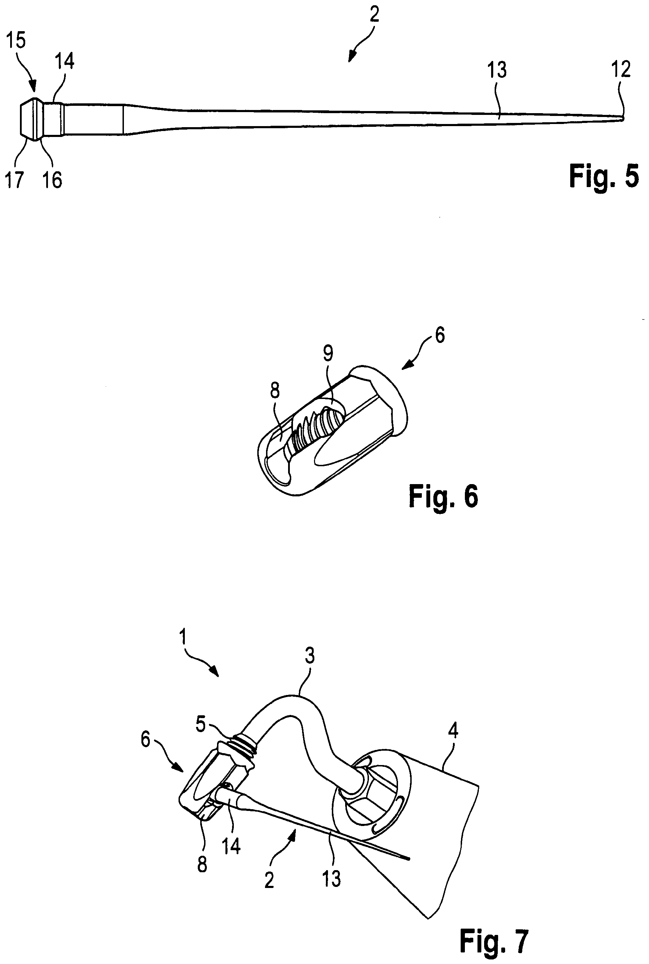

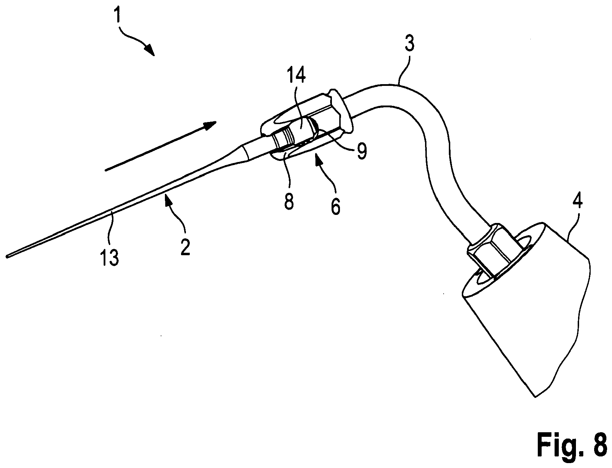

Die Klemmmutter 6, welche mit der erwähnten Durchgangsausnehmung 7 versehen ist, umfasst eine schlitzartige Ausnehmung 8, die sich vom distalen Ende bis zu einem mittigen Bereich erstreckt (siehe insbesondere Fig. 4 und 6). Der Endbereich der schlitzartigen Ausnehmung 8 ist als vergrößerte Ausnehmung 9 ausgebildet, um den verdickten Bereich bzw. Doppelkonusbereich 15 des Werkzeugs 2 einführen zu können, so wie dies in Zusammenhang mit den Fig. 7 und 8 beschrieben wird.

Die Fig. 5 zeigt in Seitenansicht ein Ausführungsbeispiel eines erfindungsgemäßen Werkzeugs 2. Dieses umfasst einen Arbeitsbereich 13, der in dem gezeigten Ausführungsbeispiel eine Spitze 12 aufweist. An dem proximalen Ende des Werkzeugs 2 ist ein Schaft 14 ausgebildet, welcher an einen verdickten Bereich 15 oder Doppelkonusbereich angrenzt. Der angrenzende Bereich des Schaftes 14 weist im Wesentlichen einen gleichbleibenden Durchmesser auf.

Der Doppelkonusbereich 15 umfasst einen ersten Konus 16 und einen zweiten Konus 17. Alternativ jedoch nicht erfindungsgemäß hierzu ist es auch möglich, den verdickten Bereich 15 mit Kugelringbereichen anstelle des ersten und des zweiten Konus 16 und 17 auszubilden. Bei Verwendung eines Doppelkonusbereichs liegt der erste Konus 16 gegen die erste Konusfläche 10 an, während der zweite Konus 17 gegen die zweite Konusfläche 11 verspannt wird, wenn die Klemmmutter 6 auf den Werkzeughalter 3 aufgeschraubt wird.

Die Verschraubung sichert eine zuverlässige Klemmung sowie eine funktionssichere Schallübertragung, das Aufschrauben kann beispielsweise mit einem Drehmoment von mindestens 20 Ncm erfolgen.

Die Instrumente können erfindungsgemäß konisch mit unterschiedlichen Durchmessern an der Instrumentenspitze 12 (ISO-Durchmesser) oder mit unterschiedlichen Konizitäten (Tapern) sowie verschiedenen Längen der Konizitäten ausgebildet sein.

Mit dem Schallspitzenwerkzeug zur Aktivierung von Spülflüssigkeiten ist es möglich, die Reinigung und Desinfektion von endodontisch aufbereiten Wurzelkanälen in besonders günstiger Weise durchzuführen. Durch die Übertragung der Schallschwingung vom Instrument auf zuvor im Wurzelkanal applizierte Spül- und/oder Desinfektionslösung wird eine bessere Reinigung von engen oder tieferliegenden Bereichen des Wurzelkanals sichergestellt.

Die Fig. 6 bis 8 zeigen in perspektivischer Darstellung jeweils die Klemmmutter 6 sowie deren Funktion. Aus Fig. 6 ist insbesondere nochmals deutlich ersichtlich, dass die schlitzartige Ausnehmung 8 an ihrem Ende eine vergrößerte Ausnehmung 9 aufweist. Wie sich aus Fig. 7 ergibt, ist durch diese vergrößerte Ausnehmung 9 der verdickte Bereich 15 (Doppelkonusbereich) des Werkzeugs 2 einsteckbar. Dies kann, so wie dies in Fig. 7 gezeigt ist, senkrecht zur Radialrichtung der Klemmmutter 6 erfolgen. Somit kann der Zahnarzt das Werkzeug 2 auf besonders einfache Weise einsetzen. Dieser Einsetzvorgang erfordert lediglich das Durchführen des verdickten Bereichs 15 durch die vergrößerte Ausnehmung 9. Das korrekte Platzieren des Werkzeugs 2 ist somit problemlos und lässt sich selbst unter Operationsbedingungen leicht verifizieren.

In einem nachfolgenden Schritt wird das Werkzeug 2 um 90° verschwenkt, so wie dies in Fig. 8 gezeigt ist. Das Werkzeug 2 befindet sich somit koaxial zur Längsachse der Klemmmutter 6. Durch Festschrauben der Klemmmutter 6 erfolgt somit eine Befestigung des Werkzeugs 2, ohne dass die Gefahr besteht, dass sich dieses löst oder dass das Werkzeug 2 in nicht korrekter Weise gespannt wird.

### Bezugszeichenliste

- 1: Schallspitzenkupplungsvorrichtung
- 2: Werkzeug
- 3: Werkzeughalter
- 4: Schallübertrager (Handstück/Antrieb)
- 5: Gewinde
- 6: Klemmmutter
- 7: Durchgangsausnehmung
- 8: schlitzartige Ausnehmung
- 9: vergrößerte Ausnehmung
- 10: erste Konusfläche
- 11: zweite Konusfläche
- 12: Spitze
- 13: Arbeitsbereich
- 14: Schaft
- 15: verdickter Bereich / Doppelkonusbereich
- 16: erster Konus
- 17: zweiter Konus
- 18: Einspanngewinde
- 19: Konus
- 20: Werkzeugeingriffsbereich
- 21: Durchgangskanal
- 22: Gewinde
- 23: Werkzeugeingriffsbereich

## Patentansprüche

1. Schall- und ultraschallaktivierbares Dentalinstrument mit einer Schallspitzenkupplungsvorrichtung (1) zur lösbaren Befestigung eines einen distalen Arbeitsbereich (13), einen proximalen Schaft (14) und am freien Ende des proximalen Schafts einen Doppelkonusbereich (15) mit einem ersten (16) und einem zweiten Konus (17) aufweisenden Werkzeugs (2) des schallaktivierbaren Dentalinstruments an einem Werkzeughalter (3) des schallaktivierbaren Dentalinstruments, welcher lösbar mit einem Schallübertrager (4) des schallaktivierbaren Dentalinstruments verbunden ist,
mit einem am distalen Endbereich des Werkzeughalters (3) ausgebildeten Gewinde (5) sowie mit einer auf das Gewinde (5) aufschraubbaren, hülsenartigen, eine Durchgangsausnehmung (7) aufweisenden Klemmmutter (6),
wobei die Klemmmutter (6) mit einer schlitzartigen Ausnehmung (8) versehen ist, welche sich vom distalen freien Ende der Klemmmutter (6) bis in einen mittigen Bereich der Klemmmutter (6) erstreckt und an ihrem proximalen Ende eine vergrößerte Ausnehmung (9) aufweist,
wobei der Durchmesser der Durchgangsausnehmung (7) am distalen Ende der Klemmmutter kleiner ist als im mittigen Bereich der Klemmmutter,
wobei am Übergang des größeren Durchmessers der Durchgangsausnehmung (7) der Klemmmutter (6) zum distal angeordneten kleineren Durchmesser in der Durchgangsausnehmung (7) eine erste Konusfläche (10) ausgebildet ist,
wobei am distalen Endbereich des Werkzeughalters (3) eine zweite innenliegende Konusfläche (11) ausgebildet ist,
wobei die vergrößerte Ausnehmung (9) dazu ausgebildet ist, dass der Doppelkonusbereich (15) des Werkzeugs in einer Richtung senkrecht zur Längsachse des Werkzeughalters (3) in die Durchgangsausnehmung (7) einsteckbar und das Werkzeug (3) dann um 90° schwenkbar ist,
so dass der erste Konus (16) gegen die erste Konusfläche (10) in Anlage kommen kann und der zweite Konus (17) gegen die zweite Konusfläche (11) verspannt werden kann, wenn die Klemmmutter (6) auf den Werkzeughalter (3) aufgeschraubt wird.

2. Dentalinstrument nach Anspruch 1, **dadurch gekennzeichnet, dass** der Werkzeughalter (3) mit einer sich axial erstreckenden Durchgangsausnehmung (21) versehen ist und/oder gerade oder gebogen ausgebildet ist.

3. Dentalschallspitzenset mit einem Ultraschallübertrager (4) und einem schall- und ultraschallaktivierbaren Dentalinstrument nach einem der Ansprüche 1 oder 2 sowie einem lösbar an dem Werkzeughalter (3) gelagerten Schallspitzenwerkzeug (2), wobei das Schallspitzenwerkzeug (2) mit einem distalen Arbeitsbereich (13) und einem proximalen Schaft (14), an dessen freiem Ende ein Doppelkonusbereich (15) mit einem ersten (16) und einem zweiten (17) Konus ausgebildet ist.

4. Dentalschallspitzenset nach Anspruch 3, **dadurch gekennzeichnet, dass** das Schallspitzenwerkzeug eine zentrische oder außenliegende axiale Ausnehmung durch den Schaft und/oder den Arbeitsbereich aufweist.

5. Dentalschallspitzenset nach Anspruch 3 oder 4, **dadurch gekennzeichnet, dass** der Schaft (14) zumindest angrenzend an den Doppelkonusbereich (15) mit einem in Axialrichtung gleichbleibenden Durchmesser versehen ist.

6. Dentalschallspitzenset nach einem der Ansprüche 3 bis 5, **dadurch gekennzeichnet, dass** das Schallspitzenwerkzeug aus einem Nickel-Titan-Werkstoff gefertigt ist und/oder mit einer Titan-Nitrid-Beschichtung versehen und/oder Zirkon-Nitrid-Beschichtung und/oder mit einer Laser- oder Farbmarkierung versehen ist.

## Claims

1. Sound and ultrasound activatable dental instrument with a sound peak coupling device (1) for releasably attaching a tool (2) of the sound activatable dental instrument having a distal work area (13), a proximal shaft (14) and, at the free end of the proximal shaft, a double cone area (15) with a first (16) and a second cone (17) at a tool holder (3) of the sound activatable dental instrument which is connected in a releasable manner to a sound transmitter (4) of the sound activatable dental instrument,
with a thread (5) that is formed at the distal end area of the tool holder (3) as well as with a sleeve-like clamping nut (6) that can be screwed onto the thread (5) and that has a passage recess (7),
wherein the clamping nut (6) is provided with a slit-like recess (8) which extends from the distal free end of the clamping nut (6) to a central area of the clamping nut (6) and that has an enlarged recess (9) at its proximal end,
wherein the diameter of the passage recess (7) is smaller at the distal end of the clamping nut than in the central area of the clamping nut,
wherein a fist cone surface (10) is formed at the transition of the larger diameter of the passage recess (7) of the clamping nut (6) to the distally arranged smaller diameter in the passage recess (7),
wherein a second internally located cone surface (11) is formed at the distal end area of the tool holder (3),
wherein the enlarged recess (9) is formed for ensuring that the double cone area (15) of the tool can be inserted into the passage recess (7) in a direction perpendicular to the longitudinal axis of the tool holder (3) and that the tool can then be pivoted by 90°,
so that the first cone (16) can come to rest against the first cone surface (10) and the second cone (17) can be clamped against the second cone surface (11) when the clamping nut (6) is screwed onto the tool holder (3).

2. Dental instrument according to claim 1, **characterized in that** the tool holder (3) is provided with an axially extending passage recess (21) and/or is formed in a straight or a curved manner.

3. Dental sound peak set with an ultrasound transmitter (4) and a sound and ultrasound activatable dental instrument according to any of the claims 1 or 2 as well as a sound peak tool (2) that is mounted at the tool holder (3) in a releasable manner, wherein the sound peak tool (2) is embodied with a distal work area (13) and a proximal shaft (14), with a double cone area (15) with a first (16) and a second (17) cone being formed at its free end.

4. Dental sound peak set according to claim 3, **characterized in that** the sound peak tool has a centric or an externally located axial recess through the shaft and/or the work area.

5. Dental sound peak set according to claim 3 or 4, **characterized in that** the shaft (14) is provided with a diameter that is constant in the axial direction at least adjacent to the double cone area (15).

6. Dental sound peak set according to any of claims 3 to 5, **characterized in that** the sound peak tool is made of a nickel-titanium material and/or is provided with a titanium-nitride coating and/or is provided with a zircon-nitride coating and/or with a laser or color marking.

## Revendications

1. Instrument dentaire à activation sonique et ultrasonique avec un dispositif de couplage de pointes soniques (1) pour la fixation amovible d'un outil (2) de l'instrument dentaire à activation sonique, présentant une zone de travail distale (13), un arbre proximal (14) et au niveau de l'extrémité libre de l'arbre proximal une zone de double cône (15) avec un premier (16) et un deuxième cône (17) au niveau d'un porte-outil (3) de l'instrument dentaire à activation sonique, lequel est relié de manière amovible à un transmetteur sonique (4) de l'instrument dentaire à activation sonique,
avec un filetage (5) réalisé au niveau de la zone d'extrémité distale du porte-outil (3) ainsi qu'avec un écrou de serrage (6) de type douille vissable sur le filetage (5), présentant un évidement traversant (7),
dans lequel l'écrou de serrage (6) est doté d'un évidement de type fente (8), lequel s'étend de l'extrémité libre distale de l'écrou de serrage (6) jusque dans une zone médiane de l'écrou de serrage (6) et présente à son extrémité proximale un évidement agrandi (9),
dans lequel le diamètre de l'évidement traversant (7) au niveau de l'extrémité distale de l'écrou de serrage est inférieur à celui dans la zone médiane de l'écrou de serrage,
dans lequel une première surface conique (10) est réalisée au niveau de la transition du grand diamètre de l'évidement traversant (7) de l'écrou de serrage (6) au petit diamètre agencé distalement dans l'évidement traversant (7),
dans lequel une deuxième surface conique intérieure (11) est réalisée au niveau de la zone d'extrémité distale du porte-outil (3),
dans lequel l'évidement agrandi (9) est réalisé de sorte que la zone de double cône (15) de l'outil est insérable dans l'évidement traversant (7) dans une direction perpendiculaire à l'axe longitudinal du porte-outil (3) et l'outil (3) est alors pivotable de 90°,
de sorte que le premier cône (16) peut venir en appui contre la première surface conique (10) et le deuxième cône (17) peut être serré contre la deuxième surface conique (11), lorsque l'écrou de serrage (6) est vissé sur le porte-outil (3).

2. Instrument dentaire selon la revendication 1, **caractérisé en ce que** le porte-outil (3) est doté d'un évidement traversant (21) s'étendant axialement et/ou est réalisé droit ou courbe.

3. Ensemble de pointes soniques dentaires avec un transmetteur ultrasonique (4) et un instrument dentaire à activation sonique et ultrasonique selon l'une quelconque des revendications 1 ou 2 ainsi qu'un outil à pointes soniques (2) logé de manière amovible au niveau du porte-outil (3), dans lequel l'outil à pointes soniques (2) est réalisé avec une zone de travail distale (13) et un arbre proximal (14), à l'extrémité libre duquel une zone de double cône (15) est réalisée avec un premier (16) et un deuxième (17) cône.

4. Ensemble de pointes soniques dentaires selon la revendication 3, **caractérisé en ce que** l'outil à pointes soniques présente un évidement axial centré ou extérieur à travers l'arbre et/ou la zone de travail.

5. Ensemble de pointes soniques dentaires selon la revendication 3 ou 4, **caractérisé en ce que** l'arbre (14) est doté au moins de manière adjacente à la zone de double cône (15) d'un diamètre constant dans la direction axiale.

6. Ensemble de pointes soniques dentaires selon l'une quelconque des revendications 3 à 5, **caractérisé en ce que** l'outil à pointes soniques est fabriqué en un matériau nickel-titane et/ou est doté d'un revêtement de nitrure de titane et/ou d'un revêtement de nitrure de zirconium et/ou d'un marquage laser ou couleur.
